# EUROPEAN PATENT SPECIFICATION

(11) **EP 0 448 262 B1**
(45) Date of publication and mention of the grant of the patent: **02.05.1997**
(21) Application number: 91301984.0
(22) Date of filing: 11.03.1991
(51) Int. Cl.: G06F 1/00

(54) **Prevention of determination of time of execution of predetermined data processing routine in relation to occurrence of prior observable external event**
Verhinderung der Bestimmung der Ausführungszeit einer vorbestimmten Datenverarbeitungsroutine im Zusammenhang mit dem Auftreten eines zuvor beobachtbaren Ereignisses
Evitement de la détermination du temps d'exécution d'une routine prédéterminée en relation avec l'occurrence d'un événement externe observable au préalable

(30) Priority: 20.03.1990 US 497012
(43) Date of publication of application: 25.09.1991
(73) Proprietor: GENERAL INSTRUMENT CORPORATION OF DELAWARE, Hatboro, Pennsylvania 19040 (US)
(72) Inventor: Griffin, Roy Allen III, Oceanside, California 92056 (US); Hart, Steven Raney, Encinitas, California 92024 (US); Esserman, James Neil, San Diego CA 92122 (US); Katznelson, Ron D., San Diego, California 92130 (US); Anderson, Steven Edward, La Jolla, California 92023 (US)
(74) Representative: Blatchford, William Michael

(56) References cited:
- EP-A- 0 145 405
- EP-A- 0 157 303

## Description

The present invention generally pertains to data processing and is particularly directed to preventing compromise of secure data processing routines by a procedure known as a "clock attack".

A clock attack is a procedure by which an attacker gains access to secure data or code used in a predetermined data processing routine being executed within a secure data processor, such as a secure microprocessor, by determining the time of execution of the predetermined data processing routine in relation to occurrence of an externally observable event that precedes the predetermined routine in order to enable synchronization with an internally generated instruction for the predetermined routine, and then externally changing the clock cycle for one cycle of the instruction in order to create a very short clock cycle that alters the instruction in a repeatable way that makes the secure data and/or code externally accessible.

An "externally observable event" is defined as any internal state transition that manifests itself externally, including but not limited to a change in voltage or current at any pin or combination of pins which is related to or affected by internal processor execution.

EP-A-0 157 303 describes preventing the discovery of an algorithm of a specific program by the respective methods of limiting the number of times the specific program is run; inserting a delay time before each execution of the specific program; and causing at least one other program to be run between executions of the specific program.

EP-A-0 145 405 describes preventing the discovery of a security code by introducing a relatively long delay after an unsuccessful attempt to enter the correct code, in order to prevent discovery by repeated trials.

As defined in claim 1 the present invention prevents such clock attacks by providing a method of preventing the time of execution of a predetermined data processing routine included in a macro data processing routine executed by a data processing system from being determined in relation to an occurrence of an externally observable event that precedes the execution of said predetermined routine. The method comprises the steps of (a) providing a random-content signal during each macro data processing routine; and (b) randomly varying the duration between an occurrence of the externally observable event and the execution of the predetermined routine during each macro data processing routine in response to said random-content signal.

"Duration" is determined by the number of data processing clock cycles.

The term "random" is defined as including pseudorandom as well as truly random.

In one embodiment of the present invention, step (b) includes the steps of (c) executing one or more interim data processing routines between the occurrence of the externally observable event and the execution of the predetermined routine; and (d) randomly varying the duration of said interim routines. In this embodiment of the invention, steps (c) and (d) preferably include the step of (e) randomly assembling **m** said interim routines for said execution from a group of **n** stored routines having different durations, wherein **m** and **n** are integers, with **n** being greater than **m**. It is also preferred that step (e) either includes the step of (f) randomly accessing said **m** interim routines from a secure memory; or the steps of (g) randomly accessing pointers for said **m** interim routines from a secure memory; and (h) accessing said **m** interim routines from a memory in response to said pointers.

In a further embodiment of the present invention, step (b) includes the steps of (c) executing one or more interim data processing routines between an occurrence of the externally observable event and the execution of the predetermined routine, wherein said interim routines includes a data processing routine that is essential to the execution of said macro data processing routine; and (d) randomly varying the duration of said interim routines.

In another embodiment of the present invention, step (b) includes the step of (c) randomly varying said duration in response to dynamically processed data that does not repetitively recur at the same time in relation to each occurrence of said externally observable event.

In yet another embodiment of the present invention, step (b) includes the step of (c) randomly said duration in response to a combination of dynamically processed data that does not repetitively recur at the same time in relation to each occurrence of said externally observable event, and data stored in a secure memory.

In still another embodiment of the present invention, step (b) includes the steps of (c) executing one or more interim data processing routines between the occurrence of the externally observable event and the execution of the predetermined routine; and (d) randomly the duration of said interim routines.

In all of the embodiments of the present invention, the method preferably further includes the steps of (e) monitoring said interim routines to detect whether said interim routines are being tampered with; and (f) preventing the execution of said predetermined routine in response to detecting that said interim routines are being tampered with.

As defined in claim 18 the present invention further provides a data processing system, comprising means for executing a macro data processing routine including a smaller predetermined data processing routine, wherein an externally observable event precedes execution of said predetermined routine; means for providing a random-content signal during each macro data processing routine; and means for randomly varying the duration between the occurrence of the externally observable event and the execution of the predetermined routine during each macro data processing routine in response to said random-content signal to thereby prevent the time of execution of the predetermined data processing routine from being determined in relation to an occurrence of said externally observable event.

The invention will now be described by way of example with reference to the drawings which are as follows.

Figure 1 is a diagram of one preferred embodiment of the data processing method and system of the present invention.

Figure 2 is a flow diagram of a preferred embodiment of an interim routine implemented in the method and system of Figure 1.

Figure 3 is a flow diagram of a TAMPER DETECT routine implemented in the interim routine of Figure 2.

Figure 4 is a diagram of another preferred embodiment of the data processing method and system of the present invention.

Figure 5 is a flow diagram of an alternative preferred embodiment of an interim routine.

The preferred embodiments of the present invention are implemented in a secure microprocessor having a secure memory, a nonsecure memory and a secure central processing unit (CPU). Both memories may include both a random access memory (RAM) and a read only memory (ROM). The term "secure" indicates external inaccessibility.

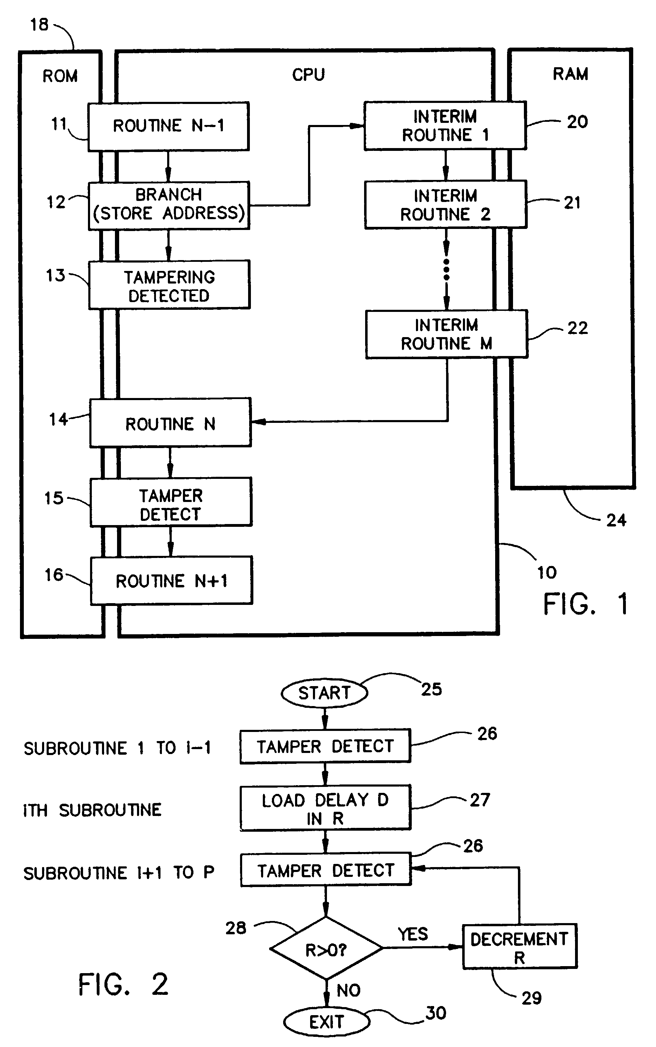

Referring to Figure 1, in one preferred embodiment of the present invention, a CPU 10 executes a group of data processing routines ROUTINE N-1, BRANCH, ROUTINE N, TAMPER DETECT AND ROUTINE N+1 (respectively identified by reference numerals 11, 12, 14, 15, 16) in response to instructions (code) accessed from a ROM 18; and further executes a maze of interim routines INTERIM ROUTINE 1, INTERIM ROUTINE 2, ..., INTERIM ROUTINE m (respectively identified by reference numerals 20, 21, 22) assembled in response to instructions accessed from a secure RAM 24.

The routines ROUTINE N-1, ROUTINE N, ROUTINE N+1 are essential sequential subroutines of a repetitive macro data processing routine, and follow the occurrence of an externally observable event during each sequence of the macro routine. In order to prevent a predetermined protected routine ROUTINE N from being synchronized with the externally observable event that repetitively precedes the protected routine ROUTINE N, the BRANCH routine 12 causes the CPU 10 to branch to the maze of m interim routines INTERIM ROUTINE 1, INTERIM ROUTINE 2,..., INTERIM ROUTINE **m**. The total duration of the m interim routines is a random variable. The **m** interim routines have different durations.

To ensure that the branch into the maze of interim routines is taken, some subroutine critical to the macro routine is buried inside the maze. If this subroutine is not performed, then the executed overall larger routine is not valuable. The critical subroutine is buried by breaking up the instructions in such a way that the instruction for the predetermined protected routine ROUTINE N does not reside sequentially after its preceding instruction. Instead, the BRANCH routine 12 saves the address of the instruction for the predetermined protected routine ROUTINE N in a secure memory location that cannot be accessed until after execution of the maze of interim routines 20, 21, 22 is completed. After the address of the instruction for the predetermined protected routine ROUTINE N is stored, the CPU 10 executes the first interim routine INTERIM ROUTINE 1.

In the sequence of instructions stored in the ROM 18, the next instruction after the instruction for the BRANCH routine 12 is a TAMPERING DETECTED routine 13. In normal operation, the TAMPERING DETECTED routine 13 will never be executed since the CPU 10 will always branch to the maze of interim routines. However, if an attacker attempts to bypass the BRANCH routine 12, the TAMPERING DETECTED routine 13 will be executed to thereby detect the attacker's tampering attempt.

The purpose of executing the interim routines is to provide a delay of a variable duration between ROUTINE N-1 and ROUTINE N. Each interim routine is a loop counter routine as shown in Figure 2, wherein the routine is completed once a number of clock cycles are counted. Referring to Figure 2, the loop counter routine includes subroutines 25, 26, 27, 28, 29 and 30. After a START subroutine 25, the number of clock cycles D to be counted is loaded into a register implemented by the CPU 10 during a LOAD DELAY D IN R subroutine 27.

The number of clock cycles D is a random number accessed from the secure RAM 24. The random clock-cycle numbers are provided in the different portions of the secure RAM 24 from which the instructions for the different interim routines are accessed. The random clock-cycle numbers may be provided in the RAM 24 in response to a signal produced by a physically (truly) random phenomena, such as a noisy diode, or in response to a pseudorandom device, such as a pseudorandom number generator.

The R>0? subroutine 28 determines whether the value in the register is greater than zero. If YES, the value in the register is decremented by one count in accordance with a DECREMENT R subroutine 29 until the value in the register equals zero; whereupon an EXIT subroutine 30 is executed.

The LOAD DELAY D IN R subroutine 27 is executed at different times in the different interim routines so that an attacker cannot alter the instruction to be executed during the same clock cycle in each interim routine so as to establish a known delay for each interim routine after having determined that the LOAD DELAY D IN R subroutine 27 is executed at a given time of one of the interim routines.

During each interim routine, the LOAD DELAY D IN R subroutine 27 is the ith subroutine. The TAMPER DETECT subroutine 26 is repeated a number of times prior to the LOAD DELAY D IN R subroutine 27 for the respective interim routine. The TAMPER DETECT subroutine 26 is also repeated a number of times following the LOAD DELAY D IN R subroutine 27 until a predetermined number P of subroutines have been executed.

Each TAMPER DETECT subroutine 26 is a predetermined trap for monitoring the interim routines to detect whether the interim routines are being tampered with; and prevents the execution of the protected routine ROUTINE N in response to detecting that the interim routines are being tampered with.

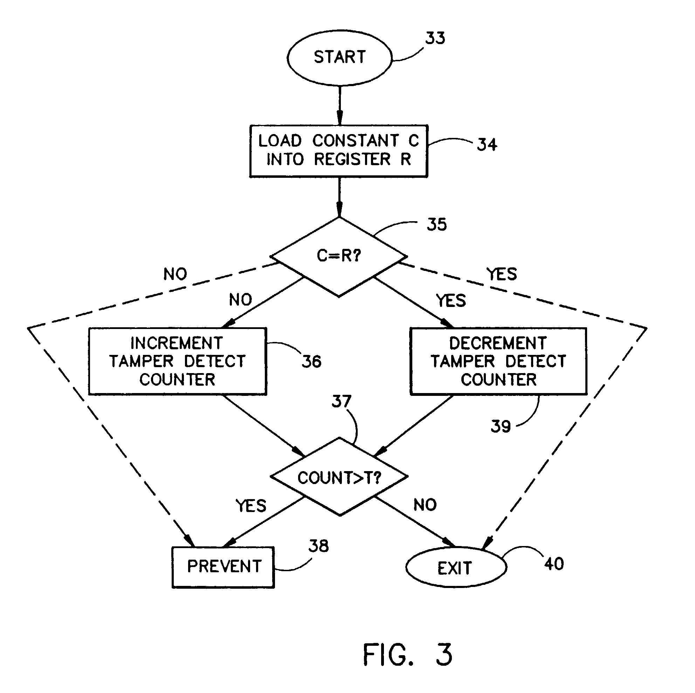

Tampering is detected by detecting the alteration of instructions during these predetermined traps. Referring to Figure 3, the TAMPER DETECT subroutine 26 includes subroutines (respectively identified by reference numerals 33, 34, 35, 36, 37, 38, 39 and 40) START, LOAD CONSTANT C INTO REGISTER R, C=R?, INCREMENT TAMPER DETECT COUNTER, COUNT>T?, PREVENT, DECREMENT TAMPER DETECT COUNTER, AND EXIT.

After a START subroutine 33, a constant C is loaded into a register implemented by the CPU 10 during a LOAD CONSTANT C INTO REGISTER R subroutine 34.

The C=R? subroutine 35 indicates whether or not there has been tampering in the nature of an attacker attempting to alter an instruction to be executed during that interim routine. The nature of the attacker's attempt is to alter the instruction that loads the duration-of-delay instruction for that interim routine, so as to establish a known delay for that interim routine. However, unless an attacker is able to correctly guess where the duration of delay instruction is located in the sequence of subroutines of the interim routine that is being executed, the attacker's attempted alteration of the instruction loading the delay for that interim routine will instead result in some value other than the constant C being entered into the register during the TAMPER DETECT subroutine 26 that is being executed when such alteration attempt occurs, whereupon the value R in the register does not equal the constant C during the C=R? subroutine 35. Thus, when C does not equal R, tampering is detected and a tamper detect counter implemented by the CPU 10 is incremented during an INCREMENT TAMPER DETECT COUNTER subroutine 36.

The count in the tamper detect counter is compared with a threshold value T during a COUNT > T? subroutine 37. Once this threshold value T is exceeded a PREVENT subroutine 38 is executed to prevent the execution of the predetermined protected routine ROUTINE N.

The PREVENT subroutine 38 can be implemented in several different ways. For example, secret information could be erased, or the maze of interim routines could be changed so that it is impossible to exit. In any implementation, the CPU 10 operation enters into an infinite loop so that no information can be obtained by an attacker as to the identity of the clock cycle when the tampering occurred.

So that spurious tampering or spurious signals won't cause entry into the PREVENT routine 38, a DECREMENT TAMPER DETECT COUNTER subroutine 39 decrements the tamper detect counter for each TAMPER DETECT subroutine 26 in which there is no indication of tampering, in that C does equal R. The count by which the tamper detect counter is decremented during the DECREMENT TAMPER DETECT COUNTER subroutine 39 is less than or equal to the count by which the tamper detect counter is incremented during the INCREMENT TAMPER DETECT COUNTER subroutine 36.

For each TAMPER DETECT subroutine 26 in which the value C in the tamper detect counter does equal R during the COUNT > T? subroutine 37, the TAMPER DETECT subroutine 26 concludes with an EXIT subroutine 40.

In alternative embodiment, the tamper detect counter is not utilized; and the PREVENT subroutine 38 is entered into whenever tampering is indicated by the value R in the register not equaling the constant C during the C=R? subroutine 35, as shown by a dashed line in Figure 3. In this alternative embodiment, the EXIT subroutine 40 is entered into whenever no tampering is indicated by the value R in the register equaling the constant C during the C=R? subroutine 35, as shown by another dashed line in Figure 3.

The interim routines should have instructions with parallel clock cycles. Most microprocessors finish execution of the current instruction when a reset interrupt occurs. If the instruction for the LOAD DELAY D IN R subroutine 27 that indicates the amount of delay in an interim routine and the instruction for the TAMPER DETECT subroutine 26 don't have exactly the same cycle lengths, then the LOAD DELAY D IN R subroutine 27 can be distinguished from the TAMPER DETECT subroutine 26 by providing a series of reset interrupts and observations of when each reset interrupt is processed. Accordingly the instructions for the LOAD DELAY D IN R subroutine 27 are of the same duration as the instructions for the TAMPER DETECT subroutine 26.

Upon completing execution of the maze of interim routines, the CPU 10 executes the protected routine ROUTINE N after accessing the address of the instruction of the protected routine ROUTINE N, which was saved by the CPU 10 when the CPU executed the BRANCH routine 12.

A TAMPER DETECT routine 15 is executed following the execution of the predetermined protected routine ROUTINE N in order to prevent an attacker from accessing the predetermined protected routine ROUTINE N by the technique of attempting to access the predetermined protected routine ROUTINE N at a time beginning after occurrence of the externally observable event of sufficient duration to encompass the maximum possible total duration of all of the interim routines and the duration of the predetermined protected routine ROUTINE N, and then upon each successive cycle of the macro processing routine making such attempt one clock cycle earlier until the predetermined protected routine ROUTINE N is accessed. Such an attack would result in the detection of tampering by the TAMPER DETECT routine 15 and the execution of a PREVENT routine before such address could be accessed.

After executing the TAMPER DETECT routine 15, the CPU executes the ROUTINE N+1.

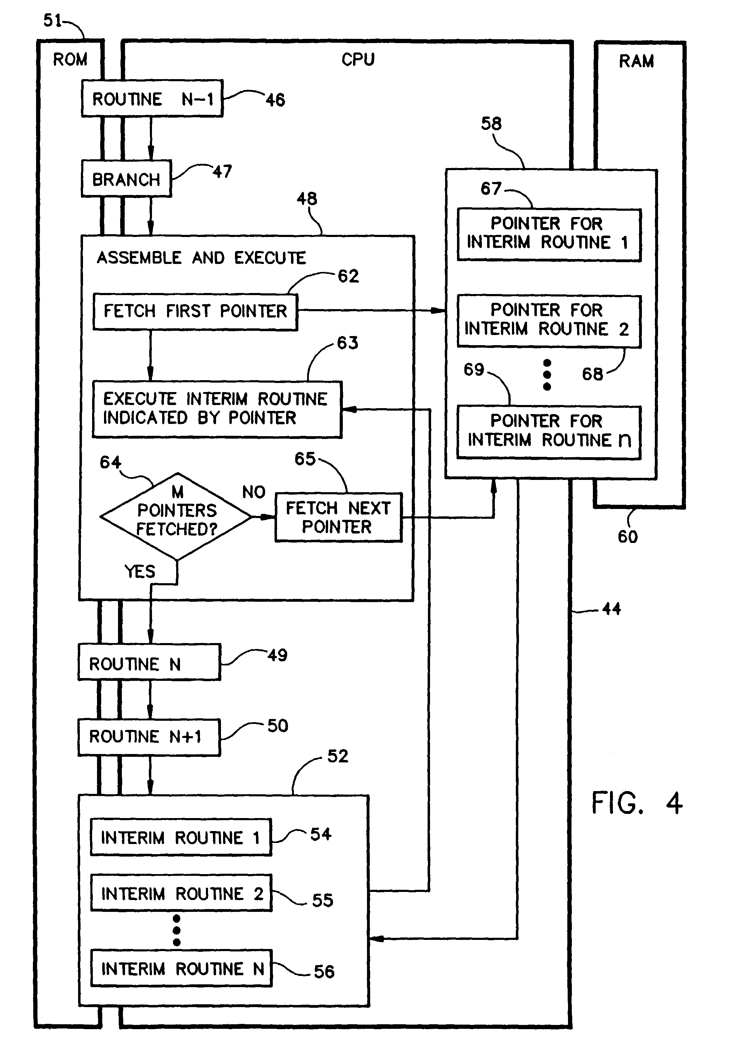

Referring to Figure 4, in an alternative preferred embodiment of the present invention that requires less secure RAM capacity than the preferred embodiment of Figure 1, a CPU 44 executes a group of data processing routines ROUTINE N-1, BRANCH, ASSEMBLE AND EXECUTE INTERIM ROUTINES, ROUTINE N AND ROUTINE N+1 (respectively identified by reference numerals 46, 47, 48, 49, 50) in response to instructions (code) accessed from a ROM 51. The routines ROUTINE N-1, ROUTINE N, ROUTINE N+1 are essential sequential subroutines of a repetitive macro data processing routine, and follow the occurrence of an externally observable event during each sequence of the macro routine. In order larger to prevent the routine ROUTINE N from being synchronized with the externally observable event that repetitively precedes the routine ROUTINE N, the BRANCH routine causes the CPU 44 to branch to a maze of **m** interim routines assembled from a group of **n** interim routines INTERIM ROUTINE 1, INTERIM ROUTINE 2, ..., INTERIM ROUTINE n (respectively identified by reference numerals 54, 55, 56) stored in the ROM 51. The **m** interim routines are assembled from the group of **n** interim routines in response to pointers 58 accessed from a secure RAM 60. **m** and **n** are integers, with **n** being greater than **m**. There are n^{m} possible mazes of interim routines. The **n** interim routines have different durations; and the selection and sequence of the **m** interim routines that are assembled for execution during a given data processing sequence is randomly varied from one sequence to the next in order to make the total duration of the interim routines a random variable. The values of the different durations of the interim routines are so distributed that a large number of the n^{m} possible mazes of interim routines have a different total duration.

Following execution of the routine ROUTINE N-1, the BRANCH routine 47 causes the CPU 44 to branch to the ASSEMBLE AND EXECUTE INTERIM ROUTINES routine 48. The ASSEMBLE AND EXECUTE INTERIM ROUTINES routine 48 includes subroutines FETCH FIRST POINTER, EXECUTE INTERIM ROUTINE IDENTIFIED BY POINTER, M POINTERS FETCHED? and FETCH NEXT POINTER (identified respectively by reference numerals 62, 63, 64, 65).

The pointers include a POINTER FOR INTERIM ROUTINE 1, a POINTER FOR INTERIM ROUTINE 2, ..., and a POINTER FOR INTERIM ROUTINE m (identified respectively by reference numerals 67, 68, 69). The pointers 67, 68, 69 are fixed but the selection and sequence of the **m** pointers that are accessed during a given data processing sequence is randomly varied from one macro data processing cycle to the next in order to make the total duration of the interim routines a random variable. The selection and sequence of the **m** pointers is provided during each macro data processing cycle in response to a signal produced by a physically (truly) random phenomena, such as a noisy diode, or in response to a pseudorandom device, such as a pseudorandom number generator.

During the FETCH FIRST POINTER routine 62, the CPU 44 fetches the POINTER FOR INTERIM ROUTINE 1 from the RAM 60 and uses such pointer to access the instruction for INTERIM ROUTINE 1 from the ROM 51.

During the EXECUTE INTERIM ROUTINE INDICATED BY POINTER routine 63, the CPU 44 executes the routine 52 accessed from the ROM 51 in response to the pointer 58.

Following each execution of the EXECUTE INTERIM ROUTINE INDICATED BY POINTER routine 63, the CPU 44 executes the m POINTERS FETCHED? routine 64. If **m** pointers have not yet been fetched from the RAM 60, the CPU 44 executes the FETCH NEXT POINTER routine 65 to fetch another pointer 58 from the RAM 60 and executes the EXECUTE INTERIM ROUTINE INDICATED BY POINTER routine 63 using the interim routine 52 indicated by the newly fetched pointer 58.

Once the m POINTERS FETCHED? routine 64 indicates that **m** pointers 58 have been fetched from the RAM 60, the CPU 44 executes the predetermined protected routine ROUTINE N.

Each interim routine 52 is a loop counter routine as described above in relation to Figure 2.

The preferred embodiment of Figure 4 may also include TAMPER DETECT routines such as the TAMPER DETECT routines 15 and 26 described above with reference to Figures 1, 2 and 3 as well as a TAMPERING DETECTED routine such as the TAMPERING DETECTED routine 13 described above with reference to Figures 1.

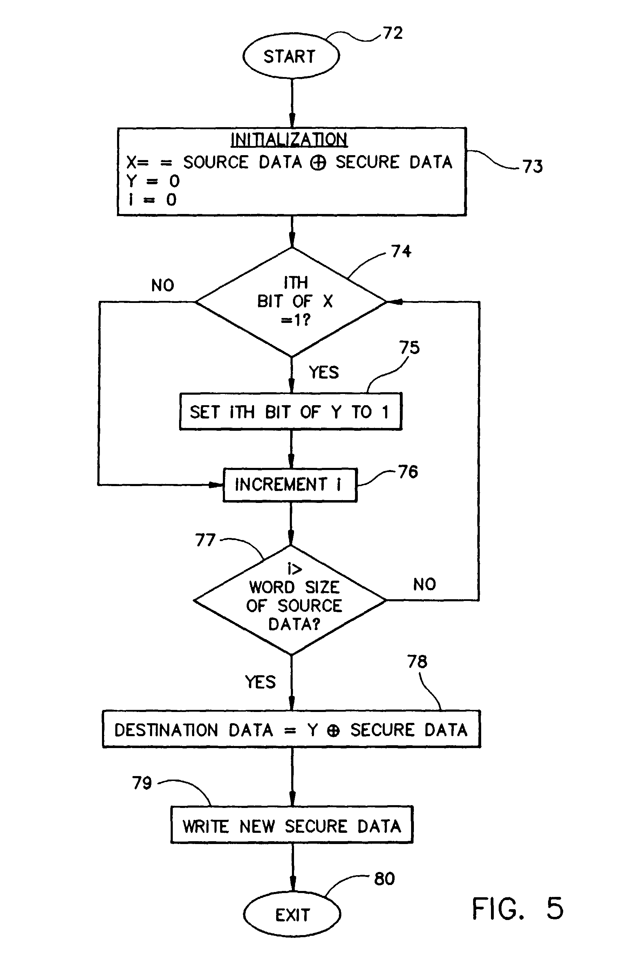

Figure 5 illustrates an alternative preferred embodiment of an interim routine. In this interim routine the duration between the externally observable event and the predetermined protected routine is randomly varied in response to both dynamically processed data that does not repetitively recur at the same time in relation to each occurrence of the observable external event, and data stored in a secure memory.

The interim routine of Figure 5 incorporates a common recurring critical routine of the macro data processing routine. In this embodiment the critical routine is the movement of source data to a destination. The source data is data that is dynamically processed during the overall larger data processing routine. The interim routine of Figure 5 is executed between each occurrence of the externally observable event and the execution of the predetermined protected routine.

The interim routine of Figure 5 includes the following subroutines, START, INITIALIZATION, iTH BIT OF X = 1?, SET iTH BIT OF Y TO 1, INCREMENT i, i > WORD SIZE OF SOURCE DATA?, DESTINATION DATA = Y ⊕ SOURCE DATA, WRITE NEW SECURE DATA, AND EXIT (identified respectively by reference numerals 72. 73, 74, 75, 76, 77, 78, 79, 80). The interim routine of Figure 5 also includes TAMPER DETECT subroutines (not shown), such as the TAMPER DETECT subroutine 26 described above, both preceding and following both the INITIALIZATION subroutine 73 and the WRITE NEW SECURE DATA SUBROUTINE 79. The instructions for the interim routine of Figure 5 are stored in a ROM and executed by a CPU in the same manner as shown in Figure 1.

After the START subroutine 72, the CPU executes the INITIALIZATION subroutine 73, during which a register X is loaded with the result of the dynamic SOURCE DATA being XORed with SECURE DATA accessed from a secure RAM, a register Y is set to zero, and a counter i is set to zero. The address of the destination of the source data is also stored during the INITIALIZATION subroutine 73.

The CPU next executes the iTH BIT OF X = 1? subroutine 74, in which it is determined whether the ith bit position of the X register is a ONE bit. Each time this subroutine 74 is executed, this determination is made with respect to a different bit position i of the X register, beginning with the least significant bit position.

Whenever the ith bit position of the Y register is a ONE bit, the SET iTH BIT OF X TO 1 subroutine 75 is executed to set the ith bit position of the Y register to ONE. The INCREMENT i subroutine 76 is then executed to increment the i register by one count.

Whenever the ith bit position of the Y register is a ZERO bit, the INCREMENT i subroutine 76 is executed to increment the i register by one count.

The i > WORD SIZE OF SOURCE DATA? subroutine determines whether the iTH BIT OF X = 1? subroutine 74 has been executed for all i bit positions of the X register. If not, the subroutine 74 is repeated.

When the iTH BIT OF X = 1? subroutine 74 has been executed for all i bit positions of the X register, the CPU executes the DESTINATION DATA = Y ⊕ SECURE DATA subroutine 78, in which the contents of the Y register is XORed with the secure data accessed from the RAM to provide the destination data which is moved to the destination indicated in the instruction for the interim routine of Figure 5.

Tampering by an attacker with the interim routine of Figure 5 in an attempt to make the total duration of the interim routine a known value would necessarily alter the content of the destination data and thereby prevent the macro data processing from being executed properly. If the source data is not moved to its destination correctly, then the rest of the macro data processing routine will be executed using incorrect data and will not produce correct results.

The total duration of the interim routine of Figure 5 is dependent upon the number of ONE bits loaded into the X register during the INITIALIZATION subroutine 73, since the SET iTH BIT OF X TO 1 subroutine 75 is executed only when the ith bit of the X register equals ONE. Thus the range of variation in the duration of the interim routine of Figure 5 is the number of clock cycles required for the subroutine 75 times the number of bit positions in the X register. Since the number of times that the subroutine 75 is executed is dependent upon the content of the dynamically processed source data and the secure data in the RAM, the total duration of the interim routine of Figure 5 is a random variable that is unknown to the observer.

The randomness of the the total duration of the interim routine of Figure 5 is further compounded by execution of the WRITE NEW SECURE DATA subroutine 78, which changes the secure data in the RAM that is accessed during the INITIALIZATION subroutine 73, so that each time the interim routine of Figure 5 is executed, such secure data may be different. The secure data may be provided in the RAM in response to a signal produced by a physically (truly) random phenomena, such as a noisy diode, or in response to a pseudorandom device, such as a pseudorandom number generator.

The interim routine of Figure 5 need not be executed in combination with other interim routines and may be incorporated into a macro data processing routine anytime critical data needs to be moved from one location (source) to another location (destination).

The method and system of the present invention are also applicable for preventing the time of execution of a predetermined data processing routine that is not included in a repetitive macro data processing routine from being determined in relation to the occurrence of an externally observable event that precedes the execution of said predetermined routine.

The method and system of the present invention are particularly suited for implementation in a microprocessor that controls descrambling of scrambled information signals by a descrambler in the possession of a subscriber in a subscriber communication network.

## Claims

1. A method of preventing the time of execution of a predetermined data processing routine included in a macro data processing routine executed by a data processing system from being determined in relation to an occurrence of an externally observable event that precedes the execution of said predetermined routine, comprising the steps of
(a) providing a random-content signal during each macro data processing routine; and
(b) randomly varying the duration between an occurrence of the externally observable event and the execution of the predetermined routine during each macro data processing routine in response to said random-content signal.

2. A method according to Claim 1, wherein step (b) comprises the steps of
(c) executing one or more interim data processing routines (20, 21, 22, 52) between the occurrence of the externally observable event and the execution of the predetermined routine (14, 49); and
(d) randomly varying the duration of said interim routines.

3. A method according to Claim 2, wherein steps (c) and (d) comprise the step of
(e) randomly assembling (48) **m** said interim routines for said execution from a group of **n** stored routines (52) having different durations, wherein **m** and **n** are integers, with **n** being greater than **m**.

4. A method according to Claim 3, wherein step (e) comprises the step of
(f) randomly accessing said **m** interim routines (52) from a secure memory (51).

5. A method according to Claim 3, wherein step (e) comprises the steps of
(f) randomly accessing pointers (58) for said **m** interim routines (52) from a secure memory (60); and
(g) accessing said **m** interim routines from a memory (51) in response to said pointers.

6. A method according to Claim 2, wherein step (d) comprises the step of
(e) providing and executing an instruction during each interim routine (20, 21, 22, 52) that affects the duration of delay for the respective interim routine during a different clock cycle of the different interim routines.

7. A method according to Claim 6, further comprising the steps of
(f) monitoring (26) subroutines of said interim routines preceding and following a subroutine of said interim routine in which the duration-of-delay instruction is provided, to detect whether an attempt has been made to alter said interim routines; and
(g) preventing (38) the execution of said predetermined routine in response to detecting a said attempt to alter said interim routines.

8. A method according to Claim 2, further comprising the steps of
(e) monitoring (26) said interim routines to detect whether said interim routines are being tampered with; and
(f) preventing (38) the execution of said predetermined routine in response to detecting that said interim routines are being tampered with.

9. A method according to Claim 8, wherein step (f) comprises the steps of
(g) counting (36) occurrences of tampering of said interim routines being detected; and
(h) preventing (38) the execution of said predetermined routine in response to said count exceeding a predetermined threshold.

10. A method according to Claim 9, wherein step (f) further comprises the step of
(i) decrementing (39) said count in response to said interim routines being executed without tampering with said interim routines being detected.

11. A method according to Claim 8, wherein steps (c) and (e) are executed in response to instructions having the same duration.

12. A method according to Claim 2, further comprising the steps of
(e) monitoring (15) said predetermined data processing routine (14) following the execution of said predetermined routine to detect whether an attacker attempts to access the predetermined routine by the technique of attempting such access at a time beginning after occurrence of the externally observable event of sufficient duration to encompass the maximum possible total duration of all of the interim routines and the duration of the predetermined routine, and then upon each successive cycle of the predetermined data processing routine making such attempt one clock cycle earlier until the predetermined routine (ROUTINE N) is accessed; and
(f) preventing (38) the execution of said predetermined routine in response to detecting said attempt.

13. A method according to Claim 2, wherein said interim routines include a data processing routine that is critical to the execution of said macro data processing routine.

14. A method according to Claim 1, wherein step (b) comprises the step of
(c) randomly varying said duration in response to dynamically processed data that does not repetitively recur at the same time in relation to each occurrence of said externally observable event.

15. A method according to Claim 14, wherein step (c) comprises the step of
(d) executing a critical subroutine of said predetermined data processing routine using said dynamically processed data, wherein the duration of said critical subroutine is dependent upon the content of said dynamically processed data.

16. A method according to Claim 15, wherein said critical subroutine comprises the step of
(e) moving said dynamically processed data from a source to a destination.

17. A method according to Claim 1, wherein step (b) comprises the step of
(c) randomly varying said duration in response to a combination of dynamically processed data that does not repetitively recur at the same time in relation to each occurrence of said externally observable event, and data stored in a secure memory.

18. A data processing system, comprising
means for executing a macro data processing routine including a smaller predetermined data processing routine, wherein an externally observable event precedes execution of said predetermined routine;
means for providing a random-content signal during each macro data processing routine; and
means for randomly varying the duration between the occurrence of the externally observable event and the execution of the predetermined routine during each macro data processing routine in response to said random-content signal to thereby prevent the time of execution of the predetermined data processing routine from being determined in relation to an occurrence of said externally observable event.

19. A system according to Claim 18, wherein the duration varying means comprises
means (10, 44, 48) for executing one or more interim data processing routines (20, 21, 22, 52) between the occurrence of the externally observable event and the execution of the predetermined routine (14, 49); and
means (10, 44) for randomly varying the duration of said interim routines.

20. A system according to Claim 19, wherein the duration varying means comprises
means (44, 48) for randomly assembling **m** said interim routines for said execution from a group of **n** stored routines (52) having different durations, wherein **m** and **n** are integers, with **n** being greater than **m**.

21. A system according to Claim 20, wherein the assembling means comprises
means for randomly accessing said **m** interim routines (52) from a secure memory (51).

22. A system according to Claim 20, wherein the assembling means comprises
means (44, 48) for randomly accessing pointers (58) for said **m** interim routines (52) from a secure memory (60); and
means (44, 48) for accessing said **m** interim routines from a memory (51) in response to said pointers.

23. A system according to Claim 19, wherein the duration varying means comprises
means (18, 51) for providing and executing an instruction during each interim routine (20, 21, 22, 52) that affects the duration of delay for the respective interim routine during a different clock cycle of the different interim routines.

24. A system according to Claim 23, further comprising
means (10, 26, 44) for monitoring subroutines of said interim routines preceding and following a subroutine of said interim routine in which the duration-of-delay instruction is provided, to detect whether an attempt has been made to alter said interim routines; and
means (10, 38, 44) for preventing the execution of said predetermined routine in response to detecting a said attempt to alter said interim routines.

25. A system according to Claim 19, further comprising
means (10, 26, 44) for monitoring said interim routines to detect whether said interim routines are being tampered with; and
means (10, 38, 44) for preventing the execution of said predetermined routine in response to detecting that said interim routines are being tampered with.

26. A system according to Claim 25, wherein the preventing means comprises
means (10, 36, 44) for counting occurrences of tampering of said interim routines being detected; and
means (10, 38, 44) for preventing the execution of said predetermined routine in response to said count exceeding a predetermined threshold.

27. A system according to Claim 26, wherein the preventing means further comprises
means (10, 39, 44) for decrementing said count in response to said interim routines being executed without tampering with said interim routines being detected.

28. A system according to Claim 25, wherein the executing means (10, 44) and the monitoring means (10, 36, 44) respond to instructions having the same duration.

29. A system according to Claim 19, further comprising
means (10, 15, 44) for monitoring said predetermined data processing routine (14) following the execution of said predetermined routine to detect whether an attacker attempts to access the predetermined routine by the technique of attempting such access at a time beginning after occurrence of the externally observable event of sufficient duration to encompass the maximum possible total duration of all of the interim routines and the duration of the predetermined routine, and then upon each successive cycle of the predetermined data processing routine making such attempt one clock cycle earlier until the predetermined routine (ROUTINE N) is accessed; and
means (10, 38, 44) for preventing the execution of said predetermined routine in response to detecting said attempt.

30. A system according to Claim 19, wherein said interim routines include a data processing routine that is critical to the execution of said macro data processing routine.

31. A system according to Claim 18, wherein the duration varying means comprises
means (10, 44) for randomly varying said duration in response to dynamically processed data that does not repetitively recur at the same time in relation to each occurrence of said externally observable event.

32. A system according to Claim 31, wherein the duration varying means comprises
means (10, 44) for executing a critical subroutine of said predetermined data processing routine using said dynamically processed data, wherein the duration of said critical subroutine is dependent upon the content of said dynamically processed data.

33. A system according to Claim 32, wherein the critical subroutine executing means comprises
means (10, 44) for moving said dynamically processed data from a source to a destination.

34. A system according to Claim 18, wherein the duration varying means comprises
means (10, 44) for randomly varying said duration in response to a combination of dynamically processed data that does not repetitively recur at the same time in relation to each occurrence of said externally observable event, and data stored in a secure memory.

## Patentansprüche

1. Verfahren, mit dem verhindert werden kann, daß die Ausführungszeit einer vorbestimmten Datenverarbeitungsroutine, die in eine von einem Datenverarbeitungssystem ausgeführte Makro-Datenverarbeitungsroutine eingebettet ist, im Verhältnis zum Auftreten eines von außen beobachtbaren, der Ausführung der vorbestimmten Routine vorausgehenden Ereignisses, bestimmt wird, mit den folgenden Schritten:
(a) Bereitstellen eines Signals mit einem Zufallsinhalt während jeder Makro-Datenverarbeitungsroutine und
(b) zufälliges Verändern der Zeitdauer zwischen einem Auftreten des von außen beobachtbaren Ereignisses und der Ausführung der vorbestimmten Routine während jeder Makro-Datenverarbeitungsroutine in Reaktion auf das Signal mit Zufallsinhalt.

2. Verfahren nach Anspruch 1, bei dem der Schritt (b) die folgenden Schritte aufweist:
(c) Durchführen einer oder mehrerer Zwischen-Datenverarbeitungsroutinen (20, 21, 22, 52) zwischen dem Auftreten des von außen beobachtbaren Ereignisses und der Ausführung der vorbestimmten Routine (14, 49); und
(d) zufälliges Verändern der Dauer der Zwischenroutinen.

3. Verfahren nach Anspruch 2, bei dem die Schritte (c) und (d) den folgenden Schritt aufweisen:
(e) zufälliges Zusammenfügen (48) von m Zwischenroutinen für die Ausführung aus einer Gruppe von n gespeicherten Routinen (52) mit verschiedenen Zeitdauern, wobei m und n ganze Zahlen sind und n größer ist als m.

4. Verfahren nach Anspruch 3, bei dem der Schritt (e) den folgenden Schritt aufweist:
(f) zufälliges Zugreifen auf die m Zwischenroutinen (52) von einem sicheren Speicher (51).

5. Verfahren nach Anspruch 3, bei dem der Schritt (e) die folgenden Schritte aufweist:
(f) zufälliges Zugreifen auf Zeiger (58) für die m Zwischenroutinen (52) von einem sicheren Speicher (60) und
(g) Zugreifen auf die m Zwischenroutinen von einem Speicher (51) in Reaktion auf die Zeiger.

6. Verfahren nach Anspruch 2, bei dem der Schritt (d) den folgenden Schritt aufweist:
(e) Liefern und Ausführen eines Befehls während jeder Zwischenroutine (20, 21, 22, 52), der sich auf die Verzögerung für die entsprechende Zwischenroutine während eines verschiedenen Taktzyklus der verschiedenen Zwischenroutine auswirkt.

7. Verfahren nach Anspruch 6, das weiter die folgenden Schritte aufweist:
(f) Überwachen (26) von Unterroutinen der Zwischenroutinen vor und nach einer Unterroutine der Zwischenroutine, in der der Befehl über die Dauer der Verzögerung gegeben wird, um zu erfassen, ob ein Versuch zum Ändern der Zwischenroutinen unternommen wurde, und
(g) Verhindern (38) der Ausführung der vorbestimmten Routine auf das Erfassen eines solchen Versuchs zum Ändern der Zwischenroutinen.

8. Verfahren nach Anspruch 2, das weiter die folgenden Schritte aufweist:
(e) Überwachen (26) der Zwischenroutinen zum Erfassen, ob auf die Zwischenroutinen eingewirkt wird, und
(f) Verhindern (38) der Ausführung der vorbestimmten Routine in Reaktion auf das Erfassen, daß auf die Zwischenroutinen eingewirkt wird.

9. Verfahren nach Anspruch 8, bei dem der Schritt (f) weiter die folgenden Schritte aufweist:
(g) Zählen (36) von Anlässen, bei denen ein Einwirken auf die Zwischenroutinen versucht wurde, und
(h) Verhindern (38) der Ausführung der vorbestimmten Routine in Reaktion darauf, daß die Zählung einen vorbestimmten Schwellenwert überschreitet.

10. Verfahren nach Anspruch 9, bei dem der Schritt (f) weiter den folgenden Schritt aufweist:
(i) Dekrementieren (39) der Zählung in Reaktion darauf, daß die Zwischenroutine ausgeführt wird, ohne daß ein Einwirken auf die Zwischenroutinen erfaßt wurde.

11. Verfahren nach Anspruch 8, bei dem die Schritte (c) und (e) in Reaktion auf Befehle gleicher Dauer ausgeführt werden.

12. Verfahren nach Anspruch 2, das weiter die folgenden Schritte aufweist:
(e) Überwachen (15) der vorbestimmten Datenverarbeitungsroutine (14) nach der Ausführung der vorbestimmten Routine zum Erfassen, ob ein Angreifer versucht, auf die vorbestimmte Routine zuzugreifen, indem er die Technik gebraucht, bei der ein solches Zugreifen zu einer Zeit versucht wird, die nach dem Auftreten eines von außen beobachtbaren Ereignisses einer Dauer beginnt, die zum Umfassen der größtmöglichen Gesamtdauer aller Zwischenroutinen und der Dauer der vorbestimmten Routine lang genug ist, und dann nach jedem aufeinanderfolgenden Zyklus der vorbestimmten Datenverarbeitungsroutine ein solcher Versuch um einen Taktzyklus früher unternommen wird, bis auf die vorbestimmten Routine (ROUTINE N) zugegriffen wird, und
(f) Verhindern (38) der Ausführung der vorbestimmten Routine auf das Entdecken des Versuchs.

13. Verfahren nach Anspruch 2, bei dem die Zwischenroutinen eine Datenverarbeitungsroutine aufweisen, die zum Ausführen der Makro-Datenverarbeitungsroutine unverzichtbar ist.

14. Verfahren nach Anspruch 1, bei dem der Schritt (b) den folgenden Schritt aufweist:
(c) zufälliges Verändern der Zeitdauer in Reaktion auf dynamisch verarbeitete Daten, die sich nicht zur gleichen Zeit im Verhältnis zum jeweiligen Auftreten des von außen beobachtbaren Ereignisses wiederholen.

15. Verfahren nach Anspruch 14, bei dem der Schritt (c) den folgenden Schritt aufweist:
(d) Ausführen einer unverzichtbaren Unterroutine der vorbestimmten Datenverarbeitungsroutine unter Verwendung der dynamisch verarbeiteten Daten, wobei die Zeitdauer der unverzichtbaren Unterroutine vom Inhalt der dynamisch verarbeiteten Daten abhängt.

16. Verfahren nach Anspruch 15, bei dem die unverzichtbare Unterroutine den folgenden Schritt aufweist:
(e) Übertragen der dynamisch verarbeiteten Daten von einer Quelle zu einem Ziel.

17. Verfahren nach Anspruch 1, bei dem der Schritt (b) den folgenden Schritt aufweist:
(c) zufälliges Verändern der Dauer in Reaktion auf eine Kombination dynamisch verarbeiteter Daten, die sich nicht zur gleichen Zeit im Verhältnis zum jeweiligen Auftreten des von außen beobachtbaren Ereignisses wiederholen, und in einem sicheren Speicher gespeicherter Daten.

18. Datenverarbeitungssystem mit
einer Einrichtung zum Ausführung einer Makro-Datenverarbeitungsroutine, die eine kleinere vorbestimmte Datenverarbeitungsroutine aufweist, bei der ein von außen beobachtbares Ereignis der Ausführung der vorbestimmten Routine vorausgeht;
einer Einrichtung zum Liefern eines Signals mit zufälligem Inhalt während jeder Makro-Datenverarbeitungsroutine, und
einer Einrichtung zum zufälligen Verändern der Dauer zwischen dem Auftreten des von außen beobachtbaren Ereignisses und der Ausführung der vorbestimmten Routine während jeder Marko-Datenverarbeitungsroutine in Reaktion auf das Signal mit zufälligem Inhalt, wodurch verhindert wird, daß die Ausführungszeit im Verhältnis zum Auftreten des von außen beobachtbaren Ereignisses bestimmt werden kann.

19. System nach Anspruch 18, bei dem die Einrichtung zum Verändern der Dauer die folgenden Elemente aufweist:
eine Einrichtung (10, 44, 48) zum Ausführen einer oder mehrerer Datenverarbeitungsroutinen (20, 21, 22, 52) zwischen dem Auftreten des von außen beobachtbaren Ereignisses und der Ausführung der vorbestimmten Routine (14, 49), und
eine Einrichtung (10, 44) zum zufälligen Verändern der Dauer der Zwischenroutinen.

20. System nach Anspruch 19, bei dem die Einrichtung zum Verändern der Dauer folgendes aufweist:
Einrichtungen (44, 48) zum zufälligen Zusammenfügen von m Zwischenroutinen für die Ausführung aus einer Gruppe von n gespeicherten Routinen (52) mit verschiedenen Zeitdauern, wobei m und n ganze Zahlen sind und n größer ist als m.

21. System nach Anspruch 20, bei dem die Einrichtung zum Zusammenfügen folgendes aufweist:
eine Einrichtung zum zufälligen Zugreifen auf die m Zwischenroutinen (52) von einem sicheren Speicher (51).

22. System nach Anspruch 20, bei dem die Einrichtung zum Zusammenfügen folgendes aufweist:
Einrichtungen (44, 48) zum zufälligen Zugreifen auf Zeiger (58) für die m Zwischenroutinen (52) von einem sicheren Speicher (60) und
Einrichtungen (44, 48) zum Zugreifen auf die m Zwischenroutinen von einem Speicher (51) in Reaktion auf die Zeiger.

23. System nach Anspruch 19, bei dem die Einrichtung zum Verändern der Dauer folgendes aufweist:
Einrichtungen (18, 51) zum Liefern und Ausführen eines Befehls während jeder Zwischenroutine (20, 21, 22, 52), der sich auf die Verzögerung für die entsprechende Zwischenroutine während eines verschiedenen Taktzyklus der verschiedenen Zwischenroutine auswirkt.

24. System nach Anspruch 23, das weiter folgendes aufweist:
Einrichtungen (10, 26, 44) zum Überwachen von Unterroutinen der Zwischenroutinen vor und nach einer Unterroutine der Zwischenroutine, in der der Befehl über die Dauer der Verzögerung gegeben wird, um zu erfassen, ob ein Versuch zum Ändern der Zwischenroutinen unternommen wurde, und
Einrichtungen (10, 38, 44) zum Verhindern der Ausführung der vorbestimmten Routine auf das Erfassen eines solchen Versuchs zum Ändern der Zwischenroutinen.

25. System nach Anspruch 19, das weiter folgendes aufweist:
Einrichtungen (10, 26, 44) zum Überwachen der Zwischenroutinen zum Erfassen, ob auf die Zwischenroutinen eingewirkt wird, und
Einrichtungen (10, 38, 44) zum Verhindern der Ausführung der vorbestimmten Routine in Reaktion auf das Erfassen, daß auf die Zwischenroutinen eingewirkt wird.

26. System nach Anspruch 25, bei dem die Einrichtung zum Verhindern folgendes aufweist:
Einrichtungen (10, 36, 44) zum Zählen (36) von Anlässen, bei denen ein Einwirken auf die Zwischenroutinen versucht wurde, und
Einrichtungen (10, 38, 44) zum Verhindern (38) der Ausführung der vorbestimmten Routine in Reaktion darauf, daß die Zählung einen vorbestimmten Schwellenwert überschreitet.

27. System nach Anspruch 26, bei dem die Einrichtung zum Verhindern weiter folgendes aufweist:
Einrichtungen (10, 39, 44) zum Dekrementieren der Zählung in Reaktion darauf, daß die Zwischenroutine ausgeführt wird, ohne daß ein Einwirken auf die Zwischenroutinen erfaßt wurde.

28. System nach Anspruch 25, bei dem die Einrichtung zum Ausführen (10, 44) und die Einrichtung zum Überwachen (10, 36, 44) auf Befehle gleicher Dauer ansprechen.

29. System nach Anspruch 19, das weiter folgendes aufweist:
Einrichtungen (10, 15, 44) zum Überwachen der vorbestimmten Datenverarbeitungsroutine (14) nach der Ausführung der vorbestimmten Routine zum Erfassen, ob ein Angreifer versucht, auf die vorbestimmte Routine zuzugreifen, indem er die Technik gebraucht, bei der ein solches Zugreifen zu einer Zeit versucht wird, die nach dem Auftreten eines von außen beobachtbaren Ereignisses einer Dauer beginnt, die zum Umfassen der größtmöglichen Gesamtdauer aller Zwischenroutinen und der Dauer der vorbestimmten Routine lang genug ist, und dann nach jedem aufeinanderfolgenden Zyklus der vorbestimmten Datenverarbeitungsroutine ein solcher Versuch um einen Taktzyklus früher unternommen wird, bis auf die vorbestimmten Routine (ROUTINE N) zugegriffen wird, und
Einrichtungen (10, 38, 44) zum Verhindern der Ausführung der vorbestimmten Routine auf das Entdecken des Versuchs.

30. System nach Anspruch 19, bei dem die Zwischenroutinen eine Datenverarbeitungsroutine aufweisen, die zur Ausführung der Makro-Datenverarbeitungsroutine unverzichtbar ist.

31. System nach Anspruch 18, bei dem die Einrichtung zum Verändern der Dauer folgendes aufweist:
Einrichtungen (10, 44) zum zufälligen Verändern der Zeitdauer in Reaktion auf dynamisch verarbeitete Daten, die sich nicht zur gleichen Zeit im Verhältnis zum jeweiligen Auftreten des von außen beobachtbaren Ereignisses wiederholen.

32. System nach Anspruch 31, bei dem die Einrichtung zum Verändern der Dauer folgendes aufweist:
Einrichtungen (10, 44) zum Ausführen einer unverzichtbaren Unterroutine der vorbestimmten Datenverarbeitungsroutine unter Verwendung der dynamisch verarbeiteten Daten, wobei die Zeitdauer der unverzichtbaren Unterroutine vom Inhalt der dynamisch verarbeiteten Daten abhängt.

33. System nach Anspruch 32, bei dem die Einrichtung zum Ausführen der unverzichtbaren Unterroutine folgendes aufweist:
Einrichtung (10, 44) zum Übertragen der dynamisch verarbeiteten Daten von einer Quelle zu einem Ziel.

34. System nach Anspruch 18, bei dem die Einrichtung zum Verändern der Dauer folgendes aufweist:
Einrichtungen (10, 44) zum zufälligen Verändern der Dauer in Reaktion auf eine Kombination dynamisch verarbeiteter Daten, die sich nicht zur gleichen Zeit im Verhältnis zum jeweiligen Auftreten des von außen beobachtbaren Ereignisses wiederholen, und in einem sicheren Speicher gespeicherter Daten.

## Revendications

1. Procédé destiné à éviter de rendre la durée d'exécution d'une routine prédéterminée de traitement des données comprise dans une macroroutine de traitement des données exécutée par un système de traitement des données dépendante de l'occurrence d'un événement externe observable qui précède l'exécution de ladite routine prédéterminée, comprenant les étapes consistant à :
(a) générer un signal à contenu aléatoire durant chaque macroroutine de traitement des données ; et,
(b) faire varier de façon aléatoire la durée qui sépare une occurrence de l'événement externe observable et l'exécution de la routine prédéterminée durant chaque macroroutine de traitement des données en réponse audit signal à contenu aléatoire.

2. Procédé selon la revendication 1, dans lequel l'étape (b) comprend les phases consistant à :
(c) exécuter une ou plusieurs routines intérimaires (20,21,22,52) de traitement des données entre l'occurrence de l'événement externe observable et l'exécution de la routine prédéterminée (14,49) ; et
(d) faire varier de façon aléatoire la durée desdites routines intérimaires.

3. Procédé selon la revendication 2, dans lequel les étapes (c) et (d) comprennent la phase consistant à :
(e) assembler (48) de façon aléatoire **m** des routines intérimaires pour ladite exécution à partir d'un groupe (52) de **n** routines mémorisées ayant des durées différentes, où **m** et **n** sont des nombres entiers avec **n** plus grand que **m**.

4. Procédé selon la revendication 3, dans lequel l'étape (e) comprend la phase consistant à :
(f) accéder de façon aléatoire aux **m** routines intérimaires (52) depuis une mémoire sécurisée (51).

5. Procédé selon la revendication 3, dans lequel l'étape (e) comprend les phases consistant à :
(f) accéder de façon aléatoire aux pointeurs (58) pour les **m** routines intérimaires (52) depuis une mémoire sécurisée (60) ; et,
(g) accéder aux **m** routines intérimaires depuis une mémoire (51) en réponse auxdits pointeurs.

6. Procédé selon la revendication 2, dans lequel l'étape (d) comprend la phase consistant à :
(e) générer et exécuter une instruction durant chaque routine intérimaire (20,21,22,52) qui affecte la durée du retard pour la routine intérimaire concernée pendant un autre cycle d'horloge des différentes routines intérimaires.

7. Procédé selon la revendication 6, comprenant en outre les étapes consistant à :
(f) contrôler (26) les sous-routines des routines intérimaires précédant et suivant une sous-routine de ladite routine intérimaire, dans laquelle l'instruction de durée est générée, afin de détecter l'existence d'un essai de modification des routines intérimaires ; et,
(g) empêcher (38) l'exécution de la routine prédéterminée en réponse à la détection d'une telle tentative pour modifier les routines intérimaires.

8. Procédé selon la revendication 2, comprenant en outre les étapes consistant à :
(e) contrôler (26) les routines intérimaires afin de détecter si elles ont été falsifiées ; et
(f) empêcher (38) l'exécution de la routine prédéterminée en réponse à la détection d'une falsification des routines intérimaires.

9. Procédé selon la revendication 8, dans lequel l'étape (f) comprend les phases consistant à :
(g) compter (36) le nombre de détections de falsifications des routines intérimaires ; et,
(h) empêcher (38) l'exécution de la routine prédéterminée en réponse au comptage lorsqu'il excède une valeur prédéterminée.

10. Procédé selon la revendication 9, dans lequel l'étape (f) comprend en outre la phase consistant à :
(i) décrémenter (39) ledit comptage en réponse aux routines intérimaires exécutées sans falsification avec les routines intérimaires qui sont détectées.

11. Procédé selon la revendication 8, dans lequel les étapes (c) et (e) sont exécutées en réponse à des instructions de même durée.

12. Procédé selon la revendication 2, comprenant en outre les étapes consistant à :
(e) contrôler (15) la routine prédéterminée (14) de traitement des données suite à l'exécution de la routine prédéterminée afin de détecter si un agresseur essaie d'accéder à la routine prédéterminée par la technique consistant à tenter un tel accès à un moment qui débute après l'occurrence de l'événement externe observable de durée suffisante pour inclure la durée totale maximum possible de toutes les routines intérimaires et la durée de la routine prédéterminée puis, après chaque cycle successif de la routine prédéterminée de traitement des données, de procéder à une telle tentative un cycle d'horloge plus tôt, jusqu'à accéder à la routine prédéterminée (routine N) ; et,
(f) empêcher (38) l'exécution de la routine prédéterminée en réponse à la détection d'une telle tentative.

13. Procédé selon la revendication 2, dans lequel les routines intérimaires comprennent une routine de traitement des données essentielle à l'exécution de la macroroutine de traitement des données.

14. Procédé selon la revendication 1, dans lequel l'étape (b) comprend la phase consistant à :
(c) faire varier de façon aléatoire la durée en réponse à des données traitées dynamiquement qui ne se reproduisent pas de façon répétitive au même moment en relation avec chacune des occurrences dudit événement externe observable.

15. Procédé selon la revendication 14, dans lequel l'étape (c) comprend la phase consistant à :
(d) exécuter une sous-routine critique de la routine prédéterminée de traitement des données utilisant les données traitées de façon dynamique, la durée de la sous-routine critique dépendant du contenu des données traitées de façon dynamique.

16. Procédé selon la revendication 15, dans lequel la sous-routine critique comprend la phase consistant à :
(e) transférer les données traitées de façon dynamique depuis une source vers une destination.

17. Procédé selon la revendication 1, dans lequel l'étape (b) comprend la phase consistant à :
(c) faire varier de façon aléatoire la durée en réponse à une combinaison de données traitées dynamiquement qui ne se reproduisent pas de façon répétitive au même moment en relation avec chacune des occurrences dudit événement externe observable, et de données mémorisées dans une mémoire sécurisée.

18. Système de traitement des données comprenant :
. des moyens pour l'exécution d'une macro-routine de traitement des données comportant une routine prédéterminée de traitement des données de taille plus petite, un événement externe observable précédant l'exécution de la routine prédéterminée ;
. des moyens pour générer un signal à contenu aléatoire durant chaque macroroutine de traitement des données ; et
. des moyens pour faire varier de façon aléatoire la durée séparant l'occurrence de l'événement externe observable et l'exécution de la routine prédéterminée durant chaque macroroutine de traitement des données en réponse audit signal à contenu aléatoire, de façon à éviter que le temps d'exécution de la routine prédéterminée de traitement des données soit déterminée en relation avec une occurrence dudit événement externe observable;

19. Système selon la revendication 18, dans lequel les moyens pour faire varier la durée comprennent :
. des moyens (10,44,48) pour l'exécution d'une ou de plusieurs routines intérimaires (20,21,22,52) de traitement des données entre l'occurrence de l'événement externe observable et l'exécution de la routine prédéterminée (14,49) ; et
. des moyens (10,44) pour faire varier de façon aléatoire la durée des routines intérimaires.

20. Système selon la revendication 19, dans lequel les moyens pour faire varier la durée comprennent :
. des moyens (44,48) pour assembler de façon aléatoire **m** des routines intérimaires pour l'exécution à partir d'un groupe de n routines mémorisées (52) ayant des durées différentes, où **m** et **n** sont des nombres entiers avec **n** plus grand que **m**.

21. Système selon la revendication 20, dans lequel les moyens d'assemblage comprennent :
. des moyens pour accéder de façon aléatoire aux **m** routines intérimaires (52) depuis une mémoire sécurisée (51).

22. Système selon la revendication 20, dans lequel les moyens d'assemblage comprennent :
. des moyens (44,48) pour accéder de façon aléatoire à des pointeurs (58) pour les **m** routines intérimaires (52) depuis une mémoire sécurisée (60) ; et
. des moyens (44,48) pour accéder aux **m** routines intérimaires depuis une mémoire (51) en réponse auxdits pointeurs.

23. Système selon la revendication 19, dans lequel les moyens pour faire varier la durée comprennent :
. des moyens (18,51) pour générer et exécuter une instruction durant chaque routine intérimaire (20,21,22,52) qui affecte la durée du retard pour la routine intérimaire respective durant un autre cycle d'horloge des différentes routines intérimaires.

24. Système selon la revendication 23, comprenant en outre :
. des moyens (10,26,44) pour contrôler les sous-routines des routines intérimaires précédant et suivant une sous-routine de la routine intérimaire dans laquelle l'instruction de durée du retard est générée afin de détecter si une tentative a été faite pour modifier les routines intérimaires ; et
. des moyens (10,38,44) pour empêcher l'exécution de la routine prédéterminée en réponse à la détection d'une telle tentative pour modifier les routines intérimaires.

25. Système selon la revendication 19, comprenant en outre :
. des moyens (10,26,44) pour contrôler les routines intérimaires afin de détecter si ces routines intérimaires ont été falsifiées ; et
. des moyens (10,38,44) pour empêcher l'exécution de la routine prédéterminée en réponse à la détection d'une falsification des routines intérimaires.

26. Système selon la revendication 25, dans lequel les moyens pour éviter comprennent :
. des moyens (10,36,44) pour compter le nombre de fois où des falsifications des routines intérimaires ont été détectées ; et
. des moyens (10,38,44) pour empêcher l'exécution de la routine prédéterminée en réponse à ce comptage lorsqu'il excède une valeur prédéterminée.

27. Système selon la revendication 26, dans lequel les moyens pour éviter comprennent en outre :
. des moyens (10,39,44) pour décrémenter ledit comptage en réponse aux routines intérimaires exécutées sans falsification avec les routines intérimaires qui sont détectées.

28. Système selon la revendication 25, dans lequel les moyens d'exécution (10,44) et les moyens de contrôle (10,36,44) répondent à des instructions de même durée.

29. Système selon la revendication 19, comprenant en outre :
. des moyens (10,15,44) pour contrôler la routine prédéterminée (14) de traitement des données suite à l'exécution de cette routine prédéterminée afin de détecter si un agresseur essaie d'accéder à la routine prédéterminée par la technique consistant à tenter un tel accès à un moment qui débute après l'occurrence de l'événement externe observable de durée suffisante pour inclure la durée totale maximum possible de toutes les routines intérimaires et la durée de la routine prédéterminée puis, après chaque cycle successif de la routine prédéterminée de traitement des données, de faire une telle tentative un cycle d'horloge plus tôt jusqu'à accéder à la routine prédéterminée (routine N) ; et,
. des moyens (10,38,44) pour empêcher l'exécution de cette routine prédéterminée en réponse à la détection d'une telle tentative.

30. Système selon la revendication 19, dans lequel les routines intérimaires comprennent une routine de traitement des données essentielles à l'exécution de la macroroutine de traitement des données.

31. Système selon la revendication 18, dans lequel les moyens pour faire varier la durée comprennent :
. des moyens (10,44) pour faire varier cette durée de façon aléatoire en réponse à des données traitées dynamiquement qui ne se reproduisent pas de façon répétitive au même moment en relation avec chacune des occurrences dudit événement externe observable.

32. Système selon la revendication 31, dans lequel les moyens pour faire varier la durée comprennent :
. des moyens (10,44) pour l'exécution d'une sous-routine critique de la routine prédéterminée de traitement des données utilisant les données traitées de façon dynamique, la durée de cette sous-routine critique dépendant du contenu des données traitées de façon dynamique.

33. Système selon la revendication 32, dans lequel les moyens d'exécution de la sous-routine critique comprennent :
. des moyens (10,44) pour transférer les données traitées de façon dynamique d'une source vers une destination.

34. Système selon la revendication 18, dans lequel les moyens pour faire varier la durée comprennent :
. des moyens (10,44) pour faire varier de façon aléatoire cette durée en réponse à une combinaison des données traitées dynamiquement qui ne se reproduisent pas de façon aléatoire au même moment en relation avec chacune des occurrences dudit événement externe observable, et de données mémorisées dans une mémoire sécurisée.
